# EUROPEAN PATENT SPECIFICATION

(11) **EP 2 928 312 B1**
(45) Date of publication and mention of the grant of the patent: **19.02.2020**
(21) Application number: 13815792.0
(22) Date of filing: 05.12.2013
(51) Int. Cl.: A23C 9/142, A23C 21/06, A23C 9/13, A23C 9/123, A23C 9/154, A23C 19/00, A23C 19/05, A23C 19/076, A23C 1/00, A23C 9/12

(54) **METHOD FOR PRODUCING MILK-BASED PRODUCTS**
VERFAHREN ZUR HERSTELLUNG VON MOLKEREIPRODUKTEN
PROCÉDÉ DE PRODUCTION DE PRODUITS À BASE DE LAIT

(30) Priority: 07.12.2012 FI 20126278
(43) Date of publication of application: 14.10.2015
(73) Proprietor: Valio Ltd, 00370 Helsinki (FI)
(72) Inventor: HEINO, Antti, 00370 Helsinki (FI); HELLE, Ulla, 00370 Helsinki (FI); KOPONEN, Mika, FI-02180 Espoo (FI)
(74) Representative: Kolster Oy Ab
(86) International application number: PCT/FI2013/051143
(87) International publication number: WO 2014/087054

(56) References cited:
- EP-A1- 0 283 101
- WO-A1-2005/016015
- WO-A1-2012/110705
- AUGUSTIN M A ET AL: "USE OF BLENDS OF SKIM MILK AND SWEET WHEY PROTEIN CONCENTRATES IN RECONSTITUTED YOGURT", AUSTRALIAN JOURNAL OF DAIRY TECHNOLOGY, DAIRY INDUSTRY ASSOCIATION OF AUSTRALIA, MELBOURNE, AU, vol. 58, no. 1, 1 April 2003 (2003-04-01), pages 30-35, XP001166338, ISSN: 0004-9433

## Description

### FIELD OF THE INVENTION

The present invention relates to a method for producing milk-based products. More particularly, the invention relates to a method for producing acidified milk products.

### BACKGROUND OF THE INVENTION

Quark is unripened fresh cheese which is made from pasteurized skim milk by adding an acidifier to the milk. Typically, a small amount of rennet is also added. An acid curd is formed which is separated from the whey by means of various separators. Quark has a smooth texture and mild, acid flavour. Quark can be flavoured or blended with fruits, nuts, etc., and is typically used in cooking, in baking, in confectionery products or as a dessert.

It is still desirable to prepare quark products with increased yields and to improve the organoleptic properties thereof.

Augustin M.A. et al., "Use of blends of skim milk and sweet whey protein concentrates in reconstituted yogurt", Australian Journal of Dairy Technology, Vol. 58, No. 1, April 2003, pages 30-35, discloses preparation of yogurt from sweet cheddar cheese whey concentrates.

WO 2005/016015 A1 discloses a process for producing yoghurt from commercially available whey protein concentrates (WPC80).

WO 2012/110705 A1 discloses a method for producing a whey protein product in which a milk-based raw material is subjected to microfiltration to provide an ideal whey as a microfiltration permeate. The microfiltration permeate is further concentrated by ultrafiltration to provide a whey protein concentrate. The whey protein concentrate and a casein containing material, such as the retentate obtained from the microfiltration step, are combined to provide the whey protein product. The document discloses that the whey protein product can be used as a raw material in the preparation of sour milk products.

### BRIEF DESCRIPTION OF THE INVENTION

It was surprisingly found that by means of an ideal whey protein solution acidified milk products with desirable organoleptic properties, such as fresh taste and soft velvety uniform texture, are obtained. It was further surprisingly found that the protein content of the acidified milk products can be increased by means of an ideal whey protein solution without increasing the viscosity which may impede the processability of the acidified milk products. More particularly, quark and yoghurt with increased total solids and yield are achieved without any problems in the production process. Said products have soft and velvety texture and are easily spreadable.

The disclosure provides a method for producing an acidified milk base, comprising the steps of:
- providing a milk-based solution of a milk raw material and an ideal whey protein solution,
- pasteurizing the milk-based solution to provide a pasteurized milk-based solution,
- cooling the pasteurized milk-based solution to provide a cooled milk-based solution,
- adding a coagulant to the cooled mixture and ripening to provide the acidified milk base.

The disclosure also provides a use of the acidified milk base prepared by the method of the disclosure for the preparation of an acidified milk product.

The disclosure also provides an acidified milk product having a ratio of whey protein to casein in the range from about 21:79 to about 50:50, comprising an ideal whey protein solution.

The disclosure also provides a method for producing an acidified milk product, comprising the steps of:
- providing the acidified milk base prepared by the method of the disclosure,
- sieving the acidified milk base to provide a sieved milk base,
- separating the sieved milk base to provide the acidified milk product.

In an aspect, the invention provides a method for producing an acidified milk product as defined in claim 1.

The disclosure also provides a method (not according to the invention) for producing yoghurt, comprising the steps of:
- providing the acidified milk base prepared by the method of the disclosure,
- mixing the acidified milk base to provide yoghurt.

### BRIEF DESCRIPTION OF THE DRAWINGS

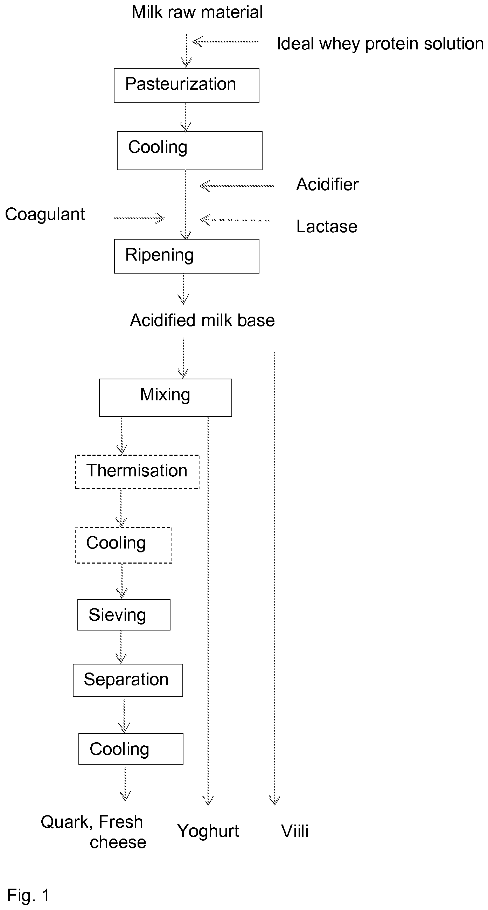

Figure 1 illustrates an embodiment of the method for producing an acidified milk base and its use in the preparation of quark, fresh cheese, yoghurt and viili.

### DETAILED DESCRIPTION OF THE INVENTION

In the present invention
the term "an ideal whey protein solution" is used herein to mean a microfiltration (MF) permeate obtained from microfiltration of milk. The term is understood to encompass a concentrated form of the MF permeate which is obtained as an ultrafiltration retentate from ultrafiltration of the MF permeate. The ideal whey protein solution does not contain fat, micellar casein or casein dust or any other by-products from the cheese manufacture. Further, it is free of caseinomacropeptides and thermally formed k-casein β-lactoglobulin complexes.
the term "milk raw material" is used herein to mean milk as such obtained from an animal, such as cow, sheep, goat, camel, mare, donkey or any other animal that producers milk suitable for human consumption, or preprocessed as desired to adjust protein, fat and/or lactose content to a desired level. The milk raw material can be full-fat (whole) milk, cream, low-fat milk, skim milk, buttermilk, colostrum, low-lactose or lactose-free milk, microfiltered milk, ultrafiltered milk, diafiltered milk, recombined milk from milk powder, organic milk or a combination of these, or a dilution of any of these. In an embodiment, the milk raw material is skim milk. In another embodiment, the milk raw material comprises whole milk and/or cream.

The milk raw material can be subjected to moderate heat treatment in order to improve the microbiological quality of the material.

The lactose content of the milk raw material can be reduced by means of any methods generally used in the art. Lactose can be removed by enzymatic methods by using a lactase enzyme to decompose lactose to monosaccharides. Lactose removal can also be performed by means of membrane techniques. Precipitation of lactose and chromatographic lactose separation are also suitable. If desired, one or more of the methods can be combined in an appropriate manner.

The disclosure provides a method for producing an acidified milk base. The acidified milk base can be typically described as sour milk. In an embodiment, the acidified milk base is ready-to-use beverage. The acidified milk base is further used in the preparation of acidified milk products. The acidified milk products include quark, yoghurt, viili and fresh cheese.

The method for producing the acidified milk base comprises the steps of:
- providing a milk-based solution of a milk raw material and an ideal whey protein solution,
- pasteurizing the milk-based solution to provide a pasteurized milk-based solution,
- cooling the pasteurized milk-based solution to provide a cooled milk-based solution,
- adding a coagulant to the cooled mixture and ripening to provide the acidified milk base.

The ideal whey protein solution is prepared by microfiltration of the milk raw material described above. The ideal whey protein solution is obtained as a microfiltration permeate. Microfiltration of the milk raw material is typically carried out at a temperature of about 2°C to about 55°C. In an embodiment, the microfiltration is carried out at about 10°C.

Microfiltration can be performed by means of diafiltration to enhance the separation of whey proteins from casein included in milk. The concentration factor in the microfiltration can range from about 1 to about 70. In an embodiment, the concentration factor is 3 and no diafiltration is carried out. In another embodiment, the concentration factor is 16.5 with diafiltration.

The size of the microfiltration membrane is in the range of about 0.05 to about 0.5 µm. In an embodiment, the size is 0.08 µm (800 kDa).

In an embodiment, the microfiltration permeate is concentrated by ultrafiltration. The concentrated ideal whey protein solution is obtained as an ultrafiltration retentate. Ultrafiltration is typically performed at about 5°C to about 55°C. In an embodiment, the ultrafiltration is carried at about 10°C. The concentration factor in the ultrafiltration can range from about 10 to about 115. In an embodiment, the concentration factor is 36. Ultrafiltration can be performed by means of diafiltration.

The protein content of the ideal whey protein solution can range from about 4% to about 25%. In an embodiment, the protein content of the solution is about 9%.

The lactose content of the ideal whey protein solution can be reduced, if desired. The lactose removal can be accomplished with the same methods as described above for the milk raw material.

The ideal whey protein solution is mixed with the milk raw material to provide a milk-based solution. The ideal whey protein solution is added in an amount to provide a ratio of whey protein to casein in the range from about 21:79 to about 50:50 to the milk-based solution. In an embodiment, the ratio is in the range from about 21:79 to about 30:70. In another embodiment, the ratio is about 30:70. In still another embodiment, the ratio is about 22:78.

In an embodiment of the invention, the protein content of the milk-based solution is in the range of about 2% to about 6%. In another embodiment, the protein content is less than about 4.9%. The protein content of the milk raw material typically ranges from about 3.2% to about 5%. This indicates that there is an optimum range within which the ideal whey protein solution is added to the milk raw material. The added amount of the ideal whey protein solution is determined by the limited binding capacity of whey proteins to casein micelles. In the production of acidified milk products where separation step is included, such as quark, fresh cheese and yoghurt, excess whey proteins are undesirably lost in whey produced as a by-product in the separation step.

In the present invention, the protein content of the whey separated from quark mass is minimized. In an embodiment, the protein content of whey is at most of about 0.5%.

The mineral content of the milk-based solution is not altered but is similar to that of normal milk. The milk-based solution is thus not subjected to calcium depletion, for instance. The ratio of calcium to casein in the milk-based solution is not altered compared to normal milk.

The milk-based solution comprising the ideal whey protein solution is subsequently pasteurized. Without wishing to be bound by theory, it is hypothesized that in pasteurization, ideal whey protein is denaturated and adhered on casein micelles. It was found that when the pasteurized milk-based solution is used in the production of quark, a substantial portion of the whey proteins are retained in quark mass. Further, beneficial rheological properties differing from those of the similar prior art products are provided to the quark product. The yield of the product is also increased due to the substantial retention of whey proteins in the quark mass. Pasteurization is typically carried out a temperature ranging from about 80°C to about 95°C for about 5 to about 15 minutes. In an embodiment, the pasteurization is carried out at about 87°C for about 7 minutes.

After pasteurization, the pasteurized milk-based solution is cooled to a temperature at which coagulation (curdling), acidification, lactase treatment and ripening are carried out.

The method of the invention comprises a step for adding a coagulant, like rennet, chymosin, lactic acid, citric acid, hydrochloric acid, oxalic acid and/or calcium salt, in order to increase the yield of the acidified milk base product. Coagulation means simultaneous clotting and gel forming which are taken place by chemical or physical means. In the chemical coagulation, an acidifier or a ferment, such as a starter, an acid, an acidogen, for example GDL, lactic acid, citric acid, hydrochloric acid or oxalic acid are included. In the physical coagulation, coagulation is performed by means of a coagulant, such as rennet and chymosin, high pressure treatment or heating. In an embodiment of the invention, the coagulant comprises a starter, chymosin or both.

The temperature at which coagulation, acidification, lactase treatment and ripening are carried out can vary within the range of about 20°C to about 45°C, depending on the specific acidifier (starter) and enzyme used in the method. In an embodiment, the solution is cooled to about 29°C. Typically, a plate heat exchanger is used in cooling. In an embodiment, the coagulant is added to the cooled milk-based solution.

Any acidifier commonly used in the preparation of acidified milk products can be used in the method of the present invention. Also, the acidification conditions, such as temperature, time and heat treatments are those commonly used in the field.

The cooled milk-based solution is acidified by adding a biological acidifier characteristic of each acidified milk product, e.g. a bulk starter or DVS starter (direct to vat starter), a chemical acidifier or organic or inorganic acids. For instance, a mesophilic starter (Lactococcus lactis ssp. cremoris, Lactococcus lactis ssp. lactis, Leuconostoc mesenteroides ssp. cremoris and Lactococcus lactis ssp. diacetylactis) is typically used in the preparation of quark. Examples of suitable organic acids include glucono-delta-lactone and lactic acid. In the production of viili type products, in addition to lactic acid bacteria acidifiers also viili mould is used.

In an embodiment, the method of the invention comprises a lactose hydrolysis step in which lactose is split into monosaccharides, i.e. glucose and galactose. In an embodiment, a lactase enzyme is added to the cooled milk-based solution. The lactose hydrolysis may be carried out using lactase enzymes widely used in the dairy field and by means of conventional methods. There are several different commercially available lactase enzymes ([beta]-D-galactosidases) that are suitable for use in the process of the invention. These include for instance enzymes produced with the *Kluyveromyces fragilis* strain, such as HA lactase (Chr. Hansen A/S, Denmark), or enzymes produced with the *Kluyveromyces lactis* strain, such as Validase (Valley Research Inc., USA), Maxilact L2000 lactase (DSM, Holland) and Godo YNL (Godo Shusei Company, Japan). An example of mould-based lactase preparations is GLL cone, lactase produced by *Aspergillus oryzae* (Biocon Japan Ltd, Japan). The optimal hydrolysis conditions depend on the enzyme in question, and they are available from the manufacturers of commercial enzymes.

The cooled milk-based solution comprising an acidifier and a coagulant and an optional lactase enzyme, is ripened for about 3 to about 25 hours to provide an acidified milk base. In an embodiment, ripening is carried out for about 20 hours.

The protein content of the acidified milk base is in the range of about 2% to about 6%. In an embodiment, the acidified milk base is sour milk. The acidified milk base had fresh, pure, mildly acidic flavour.

The acidified milk base of the disclosure is used for producing of acidified milk products, such as quark, fresh cheese, viili and yoghurt. The disclosure thus provides a use of the acidified milk base of the disclosure for the preparation an acidified milk product, such as quark, fresh cheese, viili and yoghurt.

The disclosure provides an acidified milk product having a ratio of whey protein to casein in the range from about 21:79 to about 50:50, comprising an ideal whey protein solution. In an embodiment, the ratio is in the range from about 21:79 to about 30:70. In another embodiment, the ratio is about 30:70. In still another embodiment, the ratio is about 22:78.

The disclosure provides a method for producing an acidified milk product, comprising the steps of:
- providing the acidified milk base prepared by the method of the disclosure,
- sieving the acidified milk base to provide a sieved milk base,
- separating the sieved milk base to provide the acidified milk product.

In an embodiment, the acidified milk product prepared by the above method of the invention is quark. The milk raw material used in the production of quark is typically skim milk. However, milk raw materials with higher fat content can also be used.

In another embodiment, the acidified milk product prepared by the above method of the invention is fresh cheese. In the production of fresh cheese, the milk raw materials having higher fat content as compared to that used in the production of quark are typically used. In an embodiment, whole milk and/or cream are used as a milk raw material in the production of fresh cheese. In an embodiment of the fresh cheese production, the quark is subjected to homogenization.

In an embodiment, the acidified milk base is mixed prior to sieving.

In an embodiment of the invention, the acidified milk base is heat-treated prior to sieving in order to enhance the adhesion of the whey proteins to casein. In an embodiment, the heat treatment is thermisation. Thermisation can be carried out in conditions typically used in the preparation of quark products. Thermisation is typically performed at about 55°C to about 68°C for about 5 to about 20 minutes. In an embodiment, the thermisation is carried out at about 62°C for about 8 minutes.

In cases where the acidified milk base is heat-treated, the heat-treated milk base is cooled to a separation temperature prior to sieving and separation of the milk base.

The sieving of the acidified milk base is conducted in a manner known in the field.

The sieved milk base, optionally heat-treated and cooled, is subsequently subjected to a separation step in which quark mass is separated from an acid whey solution containing milk minerals an optional lactase enzyme. The separation can be effected by a quark separator typically used in the production of quark products. The quark mass can also be separated by ultrafiltration where quark mass is retained in the ultrafiltration retentate and the whey solution is passed through a membrane into a permeate. For example, a plate & frame ultrafiltration apparatus can be used. The separation is carried out under the conditions, such as temperature, commonly used in the preparation of quark.

The quark mass can finally be cooled and packaged to a suitable consumer or food service package.

The total solids of the acidified milk product is about 14% to about 28%.

The final acidified milk product has desirable organoleptic properties, such as fresh, pure, mildly taste and soft velvety uniform texture. Further, the product is in easily spreadable form.

Yoghurt can be produced by separating the acidified milk base of the disclosure. Yoghurt can also be produced by simple mixing the acidified milk base. The disclosure provides a method for producing yoghurt, comprising the steps of:
- providing the acidified milk base prepared by the method of the disclosure,
- mixing the acidified milk base to provide yoghurt.

The acidified milk product of the invention may be supplemented with probiotics such as *Lactobacillus LGG,* prebiotics such as galacto-oligosaccharides, amino acids such as taurine, proteins such as lactoferrin, and nucleotides.

Figure 1 illustrates an embodiment of the method for producing an acidified milk base. The Figure further illustrates a use of the acidified milk base in the production of quark, fresh cheese, yoghurt and viili. Accordingly, an ideal whey protein solution is combined with a milk raw material and then subjected to pasteurization. The pasteurized mixture is cooled. A coagulant and an acidifier and an optional lactase enzyme are added after cooling. The mixture is ripened to provide an acidified milk base.

In the production of quark or fresh cheese, the acidified milk base is mixed prior to sieving. The mixed acidified milk base can be subjected to thermisation. If thermised, the acidified milk base is subsequently cooled to a sieving temperature. The sieved milk base is subjected to separation to provide quark mass. The quark mass is finally cooled.

The acidified milk base can further be processed to yoghurt by mixing the acidified milk base.

The acidified milk base can also be processed to viili by using a suitable viili mould in the production of the acidified milk base.

The following examples are given to further illustrate the invention without, however, restricting the invention thereto.

A reference example is given where cheese whey is used instead of an ideal whey protein solution in the production of quark. The organoleptic properties of the reference product are significantly different from those of the acidified milk product of the invention.

### EXAMPLES

### Example 1. Preparation of ideal whey protein solution

Skim milk was microfiltered with polymeric microfiltration membranes of 800 kDa (Synder FR-3A-6338) at 10°C. The microfiltration was performed with a concentration factor of 16.5.

The microfiltration permeate obtained from the microfiltration was concentrated by ultrafiltration with an ultrafiltration membrane of 10 kDa (Koch HFK-131 6438-VYT) and with a concentration factor of 36 at 10°C to provide an ideal whey protein solution in a concentrated form as an ultrafiltration retentate. The protein content of the ideal whey solution was 9%.

### Example 2. Preparation of an acidified milk base (sour milk)

9 555 L of a milk raw material having a protein content of 3.6% and 445 L of the ideal whey protein solution obtained in Example 1 was mixed to provide 10 000 L of a milk-based solution having a protein content of 3.7%. The milk-based solution was stirred and pasteurized at a temperature of 87°C for 7 minutes.

After pasteurization, the milk-based solution was cooled to a temperature of about 29°C. An acidifier (starter culture) and lactase enzyme was added to the cooled solution. The pH of the acidified and lactose hydrolysed milk-based solution decreased to a level of about 4.5 during a period of time about 20 hours to provide an acidified milk base. The acidified milk base was then stirred.

### Example 3. Preparation of quark

The acidified milk base prepared in Example 2 was further processed to quark as follows: The acidified milk base was thermised on a plate heat exchanger at a temperature of 63°C. After thermisation, the acidified milk base was cooled to 43°C and sieved. Subsequently, the acidified milk base was subjected to separation where quark mass was separated from the acidified milk base by a quark separator. 3 040 L of quark mass was obtained. Whey having a protein content of 0.5%, produced in the separation as a by-product, was discharged. The quark mass having total solids of about 15% was cooled to 13°C and packaged.

The final quark product had fresh taste and soft and velvety uniform texture and was easily spreadable.

The composition of the quark is shown in Table 1 below.

**Table 1**

| Sample | Total solids (%) | Protein (%) | Lactose (%) | NPN (mg/g) |
|---|---|---|---|---|
| Pasteurized milk-based solution | 9.34 | 3.72 | 3.82 | 0.35 |
| Quark | 14.77 | 10.12 | 3.02 | 0.50 |
| Whey | 5.96 | 0.49 | 3.89 | 0.58 |

The essential amino acid composition of the quark was as follows:

| | |
|---|---|
| Asparagine | 8.4 g/kg |
| Proline | 10.0 g/kg |
| Alanine | 3.5 g/kg |
| Tyrosine | 5.4 g/kg |
| Phenyl alanine | 5.1 g/kg |
| Tryptophan | 1.54 g/kg |

The amino acid analysis shows that the ideal whey protein solution used in the quark preparation is included in the quark. The ratio of whey protein to casein of the quark is about 30:70.

The rheological properties of the quark are shown in Table 2.

**Table 2**

| | Mean (Pa) | Standard deviation (Pa) | Coefficient of variation (%) | Min (Pa) | Max (Pa) |
|---|---|---|---|---|---|
| Quark | 2667 | 497 | 18.63 | 2360 | 3240 |
| Reference (normal quark) | 6243 | 402 | 6.43 | 5780 | 6490 |

| | | | | | |
|---|---|---|---|---|---|
| N=3 | | | | | |

### Example 4. Preparation of an acidified milk base (sour milk)

8 796 L of milk having a protein content of 3.6% and 1 281 L of the ideal whey protein solution prepared in Example 1 was mixed to provide 10 077 L of a milk-based solution having a protein content of 4.6%. The milk-based solution was processed to an acidified milk base in a similar manner as described in Example 2.

### Example 5. Preparation of quark

The acidified milk base prepared in Example 4 was further processed to quark by a quark separator in a manner as described in Example 3. 3 197 L of quark mass was obtained. Whey having a protein content of 0.72%, produced in the separation as a by-product, was discharged. The quark mass was cooled to 13°C and packaged.

The final quark product had fresh taste and soft and velvety uniform texture and was easily spreadable.

The composition of the quark is shown in Table 3 below.

**Table 3**

| Sample | Total solids (%) | Protein (%) | Lactose (%) | NPN (mg/g) |
|---|---|---|---|---|
| Pasteurized milk-based solution | 9.38 | 4.63 | 3.38 | 0.36 |
| Quark | 15.90 | 10.83 | 2.78 | 0.56 |
| Whey | 5.91 | 0.72 | 3.35 | 0.57 |

The essential amino acid composition of the quark was as follows:

| | |
|---|---|
| Asparagine | 9.5 g/kg |
| Proline | 9.9 g/kg |
| Alanine | 3.9 g/kg |
| Tyrosine | 5.5 g/kg |
| Phenyl alanine | 5.2 g/kg |
| Tryptopfan | 1.79 g/kg |

The amino acid analysis shows that the ideal whey is included in the quark. The ratio of whey protein to casein of the quark is about 42:58.

The rheological properties of the quark are shown in Table 4.

**Table 4**

| | Mean (Pa) | Standard deviation (Pa) | Coefficient of variation (%) | Min (Pa) | Max (Pa) |
|---|---|---|---|---|---|
| Quark | 5287 | 162 | 3.06 | 5140 | 5460 |
| Reference (normal quark) | 6243 | 402 | 6.43 | 5780 | 6490 |

| | | | | | |
|---|---|---|---|---|---|
| N=3 | | | | | |

### Example 6. Preparation of an acidified milk base (sour milk)

7 750 L of milk having a protein content of 3.6% and 2 250 L of the ideal whey protein solution prepared in Example 1 was mixed to provide 10 000 L of a milk-based solution having a protein content of 4.8%. The milk-based solution was processed to an acidified milk base in a similar manner as described in Example 2.

### Example 7. Preparation of quark

The acidified milk base prepared in Example 6 was further processed to quark by a quark separator in a manner as described in Example 3. The quark mass was cooled to 13°C and packaged.

The final quark product had fresh taste and soft velvety uniform texture and was easily spreadable.

### Example 8. Preparation of an acidified milk base (sour milk)

852 L of milk having a protein content of 3.6% and 150 L of the ideal whey protein solution prepared in Example 1 was mixed to provide 1 002 L of a milk-based solution having a protein content of 4.4%. The milk-based solution was processed to an acidified milk base in a similar manner as described in Example 2 except that the pasteurization temperature was 86°C.

### Example 9. Preparation of quark

The acidified milk base prepared in Example 8 was further processed to quark as follows: The acidified milk base was thermised on a plate heat exchanger at 62°C. After thermisation, the acidified milk base was cooled to 50°C. Subsequently, the acidified milk base was subjected to separation where quark mass was separated from the acidified milk base by a plate & frame ultrafiltration apparatus. The quark mass having total solids of even about 27% was cooled to 13°C and packaged.

The final quark product had fresh taste and soft and velvety uniform texture and was easily spreadable.

### Example 10. Preparation of an acidified milk base (sour milk)

9 920 L of a milk raw material having a protein content of 3.6% and 80 L of the ideal whey protein solution obtained in Example 1 was mixed to provide 10 000 L of a milk-based solution having a protein content of 3.6%. The milk-based solution was processed to an acidified milk base in a similar manner as described in Example 2.

### Example 11. Preparation of quark

The acidified milk base prepared in Example 10 was further processed to quark by a quark separator in a manner as described in Example 3. 2 815 L of quark mass was cooled to 13°C and packaged.

The final quark product had fresh taste and soft and velvety uniform texture and was easily spreadable.

The ratio of whey protein to casein of the quark is about 22:78.

### Reference Example

Quark was prepared in similar manner as in Example 3 except that a whey protein concentrate from cheese whey was used instead of the acidified milk base of the invention. The total solids of the quark was 15%. The quark did not show as soft and velvety uniform texture as the quark of the invention. Furthermore, the reference quark exhibited an unpleasant taste of whey not present in the quark of the invention. Denaturation of the whey proteins onto casein micelles alters the behaviour of casein micelles which results in favourable changes in quark quality. The protein content and the denaturation degree of cheese whey are different from those of an ideal whey protein solution. The favourable organoleptic properties of the quark of the invention are thus based on the differences between the composition of the cheese whey and that of an ideal whey protein solution.

Further, quark was prepared in a similar manner as in Example 3 except that a milk protein concentrate was used instead of the acidified milk base of the invention. The total solids of the quark was 15%. This quark did not show as soft and velvety uniform texture as the quark of the invention either and presumably results from different protein composition.

It will be obvious to a person skilled in the art that, as the technology advances, the inventive concept can be implemented in various ways. The invention and its embodiments are not limited to the examples described above but may vary within the scope of the claims.

## Claims

1. A method for producing an acidified milk product, comprising the steps of:
i) producing an acidified milk base comprising the steps of:
- providing a milk-based solution of a milk raw material and an ideal whey protein solution, which is a microfiltration permeate obtained from microfiltration of milk, using a microfiltration membrane of 0.05 to 0.5 micron,
- pasteurizing the milk-based solution at a temperature from 80°C to 95°C for 5 to 15 minutes to provide a pasteurized milk-based solution,
- cooling the pasteurized milk-based solution to provide a cooled milk-based solution,
- adding a coagulant and an acidifier to the cooled mixture and ripening to provide the acidified milk base,
ii) sieving the acidified milk base to provide a sieved milk base,
iii) separating the sieved milk base to provide acidified milk product,
wherein the total solids of the acidified milk product is 14% to 28%.

2. The method of claim 1, wherein the microfiltration permeate is concentrated by ultrafiltration to provide a concentrated ideal whey protein solution as an ultrafiltration retentate.

3. The method of claim 1 or 2, wherein the microfiltration, ultrafiltration or both are carried out by using diafiltration.

4. The method of any one of the preceding claims, wherein the milk-based solution is not subjected to calcium depletion.

5. The method of any one of the preceding claims, wherein the protein content of the ideal whey protein solution is in the range of 4% to 25%, specifically about 9%.

6. The method of any one of the preceding claims, wherein the milk raw material is skim milk.

7. The method of any one of the preceding claims, wherein a ratio of whey protein to casein of the milk-based solution is in the range from 21:79 to 50:50, specifically 21:79 to 30:70, more specifically about 30:70.

8. The method of any one of the preceding claims, wherein the pasteurization is carried out at about 87°C for about 7 minutes.

9. The method of any one of the preceding claims, wherein the pasteurized mixture is cooled to a temperature from 20°C to 45°C, specifically to about 29°C.

10. The method of any one of the preceding claims, wherein the acidified mixture is ripened for 3 to 25 hours, specifically about 20 hours.

11. The method of any one of the preceding claims, further comprising a lactose hydrolysis step.

12. The method of claim 11, wherein a lactase enzyme is added prior to ripening.

13. The method of any one of the preceding claims, wherein a rennet is added prior to ripening.

14. The method of any one of the preceding claims, wherein the protein content of the acidified milk base is 2% to 6%.

15. The method of any one of the preceding claims, further comprising heat treatment of the acidified milk base.

## Patentansprüche

1. Verfahren zum Herstellen eines angesäuerten Milchproduktes, das die folgenden Schritte umfasst:
i) Erzeugen einer angesäuerten Milchbasis, das die folgenden Schritte umfasst:
- Bereitstellen einer Milchlösung aus einem Milchrohmaterial und einer idealen Molkenproteinlösung, die ein Mikrofiltrationspermeat ist, das aus der Mikrofiltration von Milch erhalten wird, wobei eine Mikrofiltrationsmembran von 0,05 bis 0,5 Mikrometer verwendet wird,
- Pasteurisieren der Milchlösung bei einer Temperatur von 80°C bis 95°C für 5 bis 15 Minuten, um eine pasteurisierte Milchlösung bereitzustellen,
- Kühlen der pasteurisierten Milchlösung, um eine gekühlte Milchlösung bereitzustellen,
- Hinzufügen eines Koagulationsmittels und eines Säuerungsmittels zur gekühlten Mischung und reifen, um die angesäuerte Milchbasis bereitzustellen,
ii) Sieben der angesäuerten Milchbasis, um eine gesiebte Milchbasis bereitzustellen,
iii) Abtrennen der gesiebten Milchbasis, um ein angesäuertes Milchprodukt bereitzustellen,
wobei die Gesamttrockenmasse des angesäuerten Milchproduktes 14% bis 28% ausmachen.

2. Verfahren nach Anspruch 1, wobei das Mikrofiltrationspermeat durch Ultrafiltration konzentriert wird, um eine konzentrierte ideale Molkenproteinlösung als Ultrafiltrationsretentat bereitzustellen.

3. Verfahren nach Anspruch 1 oder 2, wobei die Mikrofiltration, Ultrafiltration oder beide durch Verwendung von Diafiltration ausgeführt werden.

4. Verfahren nach einem der vorherigen Ansprüche, wobei die Milchlösung keiner Kalziumdepletion ausgesetzt wird.

5. Verfahren nach einem der vorherigen Ansprüche, wobei der Proteingehalt der idealen Molkenproteinlösung im Bereich von 4% bis 25% liegt, insbesondere etwa 9%.

6. Verfahren nach einem der vorherigen Ansprüche, wobei das Milchrohmaterial Magermilch ist.

7. Verfahren nach einem der vorherigen Ansprüche, wobei ein Verhältnis von Molkenprotein zum Kasein der Milchlösung im Bereich von 21:79 bis 50:50 liegt, insbesondere 21:79 bis 30:70, insbesondere etwa 30:70.

8. Verfahren nach einem der vorherigen Ansprüche, wobei die Pasteurisierung bei etwa 87°C für etwa 7 Minuten ausgeführt wird.

9. Verfahren nach einem der vorherigen Ansprüche, wobei die pasteurisierte Mischung auf eine Temperatur von 20°C bis 45°C, insbesondere auf etwa 29°C gekühlt wird.

10. Verfahren nach einem der vorherigen Ansprüche, wobei die angesäuerte Mischung für 3 bis 25 Stunden, insbesondere etwa 20 Stunden gereift wird.

11. Verfahren nach einem der vorherigen Ansprüche, das ferner einen Laktose-Hydrolyseschritt umfasst.

12. Verfahren nach Anspruch 11, wobei ein Laktase-Enzym vor der Reifung zugesetzt wird.

13. Verfahren nach einem der vorherigen Ansprüche, wobei ein Labferment vor der Reifung zugesetzt wird.

14. Verfahren nach einem der vorherigen Ansprüche, wobei der Proteingehalt der angesäuerten Milchbasis 2% bis 6% beträgt.

15. Verfahren nach einem der vorherigen Ansprüche, das ferner eine Wärmebehandlung der angesäuerten Milchbasis umfasst.

## Revendications

1. Procédé pour produire un produit laitier acidifié, comprenant les étapes suivantes :
i) production d'une base laitière acidifiée comprenant les étapes suivantes :
- fourniture d'une solution à base de lait d'une matière première laitière et d'une solution de protéine de lactosérum idéale, qui est un perméat de microfiltration obtenu par microfiltration du lait, utilisant une membrane de microfiltration de 0,05 à 0,5 micromètre,
- pasteurisation de la solution à base de lait à une température de 80 °C à 95 °C pendant 5 à 15 minutes pour former une solution à base de lait pasteurisée,
- refroidissement de la solution à base de lait pasteurisée pour former une solution à base de lait refroidie,
- addition d'un coagulant et d'un acidifiant au mélange refroidi et maturation pour former la base laitière acidifiée,
ii) tamisage de la base laitière acidifiée pour former une base laitière tamisée,
iii) séparation de la base laitière tamisée pour former un produit laitier acidifié,
dans lequel la matière sèche totale du produit laitier acidifié est de 14 % à 28 %.

2. Procédé selon la revendication 1, dans lequel le perméat de microfiltration est concentré par ultrafiltration pour former une solution de protéine de lactosérum idéale concentrée sous la forme d'un rétentat d'ultrafiltration.

3. Procédé selon la revendication 1 ou 2, dans lequel la microfiltration, l'ultrafiltration ou les deux sont effectuées par utilisation d'une diafiltration.

4. Procédé selon l'une quelconque des revendications précédentes, dans lequel la solution à base de lait n'est pas soumise à un appauvrissement en calcium.

5. Procédé selon l'une quelconque des revendications précédentes, dans lequel la teneur en protéine de la solution de protéine de lactosérum idéale est située dans la gamme de 4 % à 25 %, spécifiquement d'environ 9 %.

6. Procédé selon l'une quelconque des revendications précédentes, dans lequel la matière première laitière est du lait écrémé.

7. Procédé selon l'une quelconque des revendications précédentes, dans lequel le rapport de la protéine de lactosérum à la caséine dans la solution à base de lait est situé dans la gamme de 21:79 à 50:50, spécifiquement de 21:79 à 30:70, plus spécifiquement d'environ 30:70.

8. Procédé selon l'une quelconque des revendications précédentes, dans lequel la pasteurisation est effectuée à environ 87 °C pendant environ 7 minutes.

9. Procédé selon l'une quelconque des revendications précédentes, dans lequel le mélange pasteurisé est refroidi à une température de 20 °C à 45 °C, spécifiquement d'environ 29 °C.

10. Procédé selon l'une quelconque des revendications précédentes, dans lequel le mélange acidifié est maturé pendant 3 à 25 heures, spécifiquement environ 20 heures.

11. Procédé selon l'une quelconque des revendications précédentes, comprenant en outre une étape d'hydrolyse du lactose.

12. Procédé selon la revendication 11, dans lequel une enzyme lactase est ajoutée avant la maturation.

13. Procédé selon l'une quelconque des revendications précédentes, dans lequel une présure est ajoutée avant la maturation.

14. Procédé selon l'une quelconque des revendications précédentes, dans lequel la teneur en protéine de la base laitière acidifiée est de 2 % à 6 %.

15. Procédé selon l'une quelconque des revendications précédentes, comprenant en outre un traitement thermique de la base laitière acidifiée.
